# EUROPEAN PATENT SPECIFICATION

(11) **EP 1 642 813 B1**
(45) Date of publication and mention of the grant of the patent: **08.07.2009**
(21) Application number: 05018193.2
(22) Date of filing: 22.08.2005
(51) Int. Cl.: B62J 35/00

(54) **Transparent fuel tank for motorcycles**
Durchsichtiger Kraftstofftank für Motorräder
Réservoir transparent de carburant pour motocyclettes

(30) Priority: 29.09.2004 JP 2004283431
(43) Date of publication of application: 05.04.2006
(73) Proprietor: HONDA MOTOR CO., LTD., Tokyo (JP)
(72) Inventor: Nakazawa, Yoshihiro, Wako-shi Saitama (JP); Saito, Toshikazu, Wako-shi Saitama (JP); Yoshida, Mitsugu, Wako-shi Saitama (JP)
(74) Representative: Rupp, Christian

(56) References cited:
- US-A- 3 987 294
- US-B2- 6 641 169

## Description

The present invention relates to a transparent fuel tank for a motorcycle through which the state of components such as a fuel hose disposed under the fuel tank can be seen.

A cowling for a motorcycle through which the state of components can be seen is known (for example, see Patent Document 1).
[Patent Document 1] Patent Document No.2779698 (P. 4, Fig. 1)

A basic structure of Patent Document 1 will be described briefly.

A cowling Cf for a motorcycle in the related art is formed of transparent material so as to achieve see-through from the side, whereby cylinder members 5, 6 of an engine E can be seen.

However, with the cowling for a motorcycle disclosed in Patent Document 1, a portion which corresponds to a part where wiring and piping exist, such as a bottom of a fuel tank, is not transparent, and hence the state of the wiring and piping cannot be seen.

Patent document US 3,987,294 relates to a transparent fuel tank for a motorcycle in which an illuminator provides light to the plastic wall. According to said light the rider can inspect the fuel amount which is still left in his fuel tank in the day time as well as at night. The fuel tank is made up of one piece and the bottom of said fuel tank is upwardly arched.

It is an object of the present invention to provide a transparent fuel tank for a motorcycle through which the state of wiring and piping under the fuel tank can be inspected.

This object is solved by independent claim 1.

Since a transparent fuel tank is formed of transparent resin so that piping under the fuel tank can be viewed, there is an advantage such that an extent of bending or a behavior of the piping in the same state as under the fuel tank can be inspected through the transparent fuel tank.

The transparent fuel tank for a motorcycle is a structure including a bottom plate and a body portion combined together. Consequently, there is an advantage such that the weight of the transparent fuel tank can be reduced by controlling the plate thickness of the structure, and hence a light weighted transparent fuel tank can be obtained.

When liquid which corresponds to fuel is filled in the structure including the bottom plate and the body portion combined together, behavior of the liquid surface during acceleration and deceleration can be viewed.

The piping can be viewed only through the transparent bottom plate, and the piping can be seen with less distortion than a case of being viewed through the bottom plate and the body portion, and hence there is an advantage such that distortion can be reduced.

According to Claim 2 of the invention, since the transparent fuel tank is adapted to be connected to a fuel hose, there is an advantage such that an actual movement of the piping while rotating the transparent fuel tank can be visually inspected.

According to Claim 3 of the invention, since the transparent fuel tank is utilized as a jig for confirming wiring and the piping under the fuel tank, there is an advantage such that an actual movement of the wiring and piping can be visually inspected while rotating the jig.

According to Claim 4 of the invention, since the body portion comprises an opening so that the wiring and the piping under the bottom plate can be inspected from an inside of the tank, the wiring and piping is viewed only through the transparent bottom plate from the opening. Therefore, since the piping is viewed only through the transparent bottom plate, there is an advantage such that the piping can be seen with less distortion than a case of being viewed through the bottom plate and the body portion, and hence the distortion can be reduced.
Fig. 1 is a side view of a motorcycle with a conventional fuel tank.
Fig. 2 is a drawing showing the fuel tank of Fig. 1 rotated to an inspection and maintenance position.
Fig. 3 is a drawing showing a view seen in the direction indicated by an arrow 3 in Fig. 2.
Fig. 4 is a perspective view of the transparent fuel tank according to the present invention.
Fig. 5 is a drawing of an example of a fuel tank not covered by the present invention.

Referring now to accompanied drawings, a best mode for carrying out the invention will be described below. The drawings are to be viewed in the direction in which reference numerals can be seen correctly. Terms "front", "rear", "left", "right", "up" and "down" represent directions viewed from a rider.

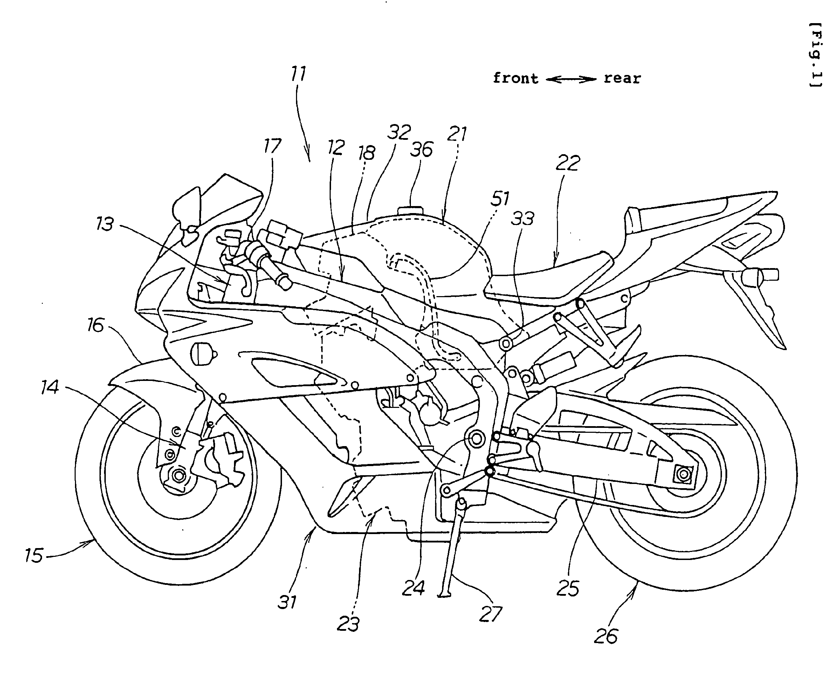

Fig. 1 is a side view of a motorcycle with a conventional fuel tank.

A motorcycle 11 includes a vehicle body frame 12, a front fork 14 mounted to a head pipe 13 of the vehicle body frame 12, a front wheel 15 and a front fender 16 mounted to the front fork 14, a handle 17 connected to the front fork 14, an air cleaner 18 and a fuel tank 21 mounted to an upper front portion of the vehicle body frame 12, a seat 22 mounted on top at a center of the vehicle body frame 12, an engine 23 disposed at the center of the vehicle body frame 12, a swing arm 25 mounted to the vehicle body frame 12 via a pivot bolt 24, a rear wheel 26 mounted to the swing arm 25, a stand 27 mounted to a lower portion of the vehicle body frame 12, and a cowling 31 mounted to the vehicle body frame 12.

The cowling 31 includes an upper cowl 32 for covering the air cleaner 18 and the fuel tank 21.

The vehicle body frame 12 is provided with a link hinge member 33 at an upper center portion thereof.

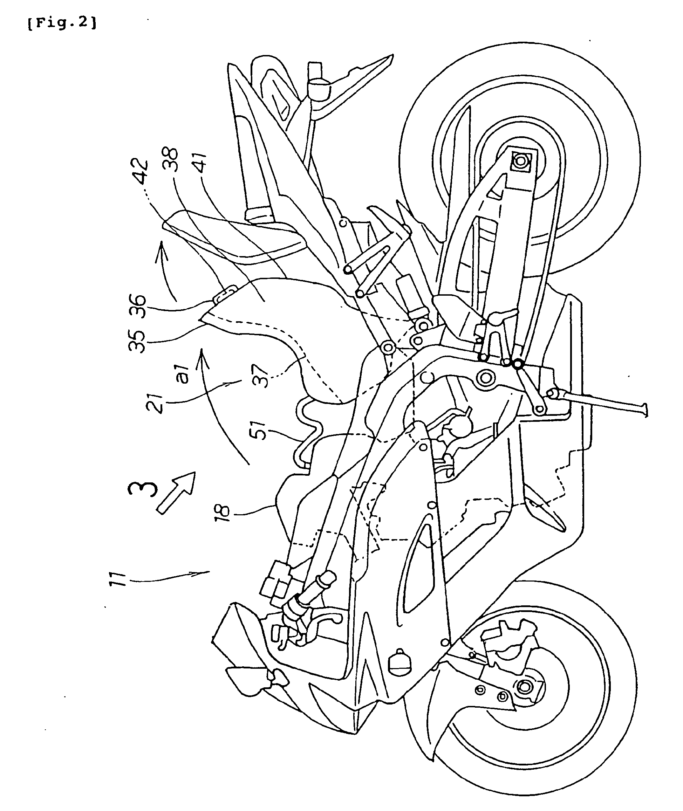

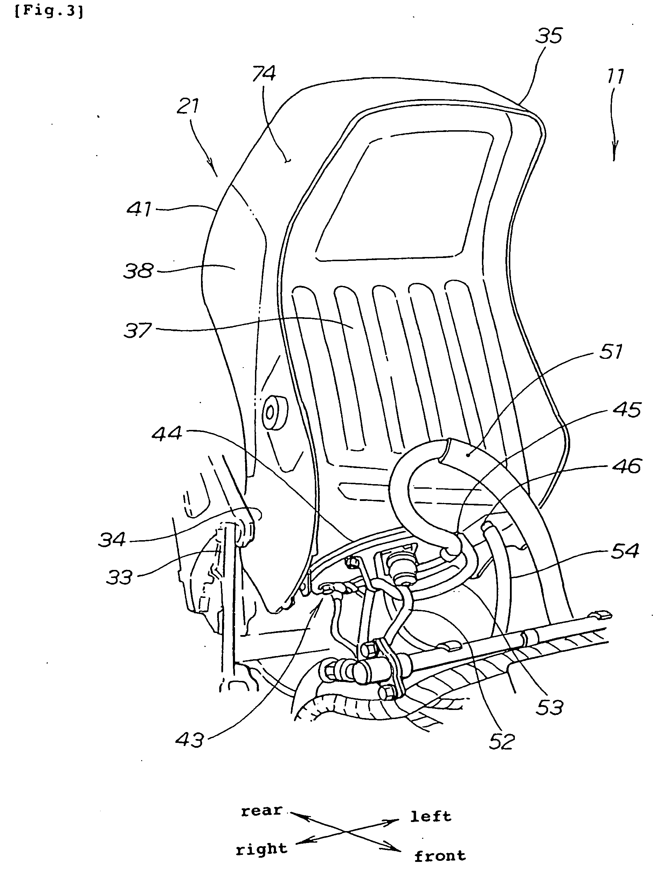

The fuel tank 21 is a tank for filling gasoline, and has a structure to connect a tank hinge 34 (see Fig. 3) to the link hinge member 33, whereby the tank hinge 34 enables rotation of the fuel tank 21 between a normal position shown in Fig. 1 and an inspection and maintenance position 35 (see Fig. 2). Reference numeral 36 designates a cap of the fuel tank 21.

While metal is used as material of the fuel tank 21, material of the fuel tank 21 is arbitrary.

Fig. 2 is a drawing showing the fuel tank of Fig. 1 rotated to an inspection an maintenance position.

In the motorcycle 11, inspection and maintenance of the air cleaner 18, a hose, or electric equipment are enabled by rotating the fuel tank 21 in the direction indicated by an arrow a1 until the inspection and maintenance position 35.

Fig. 3 is a drawing showing a view seen in the direction indicated by an arrow 3 in Fig. 2.

The fuel tank 21 includes a side portion 38 mounted to a bottom portion 37, a top portion 41 formed so as to continue from the side portion 38, and a fuel supply port 42 (see Fig. 2) formed on the top portion 41.

The bottom portion 37 includes a flange 44 for a pump for mounting a fuel supply pump unit 43, a vent port 45, and an overflow port 46.

The side portion 38 is formed with the tank hinge 34.

Here, a "bottom plate 74 of the fuel tank 21" represents the bottom portion 37 including part of the side portion 38 and part of the top portion 41. More specifically, it represents the bottom portion 37 of the fuel tank 21 including part of the side portion 38 (a portion on the side of the bottom portion 37 from a chain double-dashed line) and part of the top portion 41 (a portion on the side of the bottom portion 37 from the chain double-dashed line) continued therefrom. The chain double-dashed line indicates a line showing an edge of the bottom plate 74.

The body portion of the fuel tank 21 is a portion of the fuel tank 21 except for the bottom plate 74.

In the drawing, reference numeral 51 designates a fuel hose connected to the fuel supply pump unit 43, reference numeral 52 designates an electric cable of the fuel supply pump unit 43, reference numeral 53 designates a vent hose connected to the vent port 45, and reference numeral 54 designates an overflow hose connected to the overflow port 46.

In this manner, since the motorcycle 11 has a structure in which the fuel tank 21 is rotated to the inspection and maintenance position 35, it is different from general fuel tanks which do not rotate, and hence it is necessary to check the behavior of components such as the fuel hose 51 connected to the fuel tank 21 before designing for mass-production. Therefore, piping and wiring inspection jig was manufactured.

The piping and wiring inspection jig is the same fuel tank 21 but formed of transparent material, and is referred to as a "transparent fuel tank".

Subsequently, the transparent fuel tank will be described.

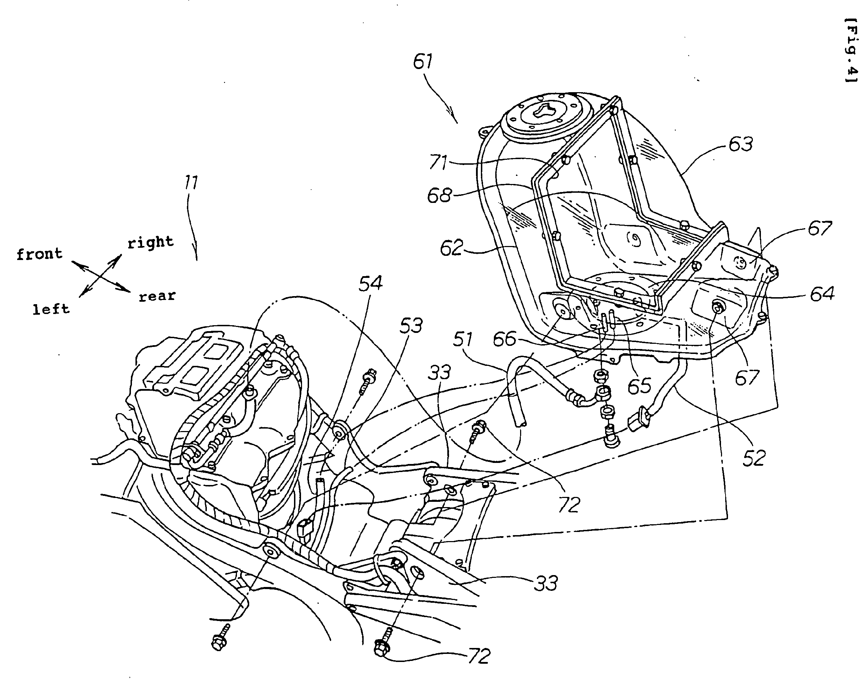

Fig. 4 is a perspective view of the transparent fuel tank according to the present invention.

A transparent fuel tank 61 is formed of transparent resin so that the piping under the fuel tank 21 (see fig. 3) can be viewed, which has the same shape as the normal fuel tank 21, and is a structure including a bottom plate 62 and a body portion 63 combined together.

The bottom plate 62 corresponds to the bottom plate 74 (see Fig. 3) of the fuel tank 21.

The bottom plate 62 includes a projection 64 of the same shape as the fuel supply pump unit 43 (see Fig. 3) mounted to the pump mounting flange 44 (see Fig. 3). More specifically, the projection 64 has a shape of a copy of a shape outside the pump mounting flange 44 (see Fig. 3), and includes a female screw portion for connecting the fuel hose 51.

In addition, the bottom plate 62 includes a bent boss 65 having the same shape as the appearance as the vent port 45 (see Fig. 3), an overflow boss 66 having the same shape as the appearance of the overflow port 46 (see Fig. 3), transparent hinges 67, 67 having the same shape as the tank hinge 34 (see Fig. 3). Reference numeral 6.8 designates a band-shaped first flange used for mating.

The body portion 63 includes a remaining portion of the side portion 38 (see Fig. 3) of the fuel tank 21 (see Fig. 3) and a remaining portion of the top portion 41 (see Fig. 3) continuing therefrom, and is formed with a band-shaped second flange 71 which abuts against the first flange 68.

The "piping" includes the fuel hose 51, the electric code 52, the vent hose 53, and the overflow hose 54.

The term "the same shape" indicates that external dimensions in appearance are the same. The shape of the inner surface (back surface) where gasoline comes into contact with is arbitrary.

Also, the transparent fuel tank 61 is formed by light molding. A method of manufacturing the transparent fuel tank 61 will be described briefly. As a first step, the fuel tank 21 (see fig. 3) is designed by a CAD device. Subsequently, the CAD information on the fuel tank 21 is copied and then, using the CAD information on the copied fuel tank 21, the transparent fuel tank 61 is designed. Three-dimensional CAD information on a transparent fuel tank, which is, divided into the bottom plate 62 and the body portion 63, and includes the first and second flanges 68, 71 with the respective bosses added thereto. Subsequently, the three-dimensional CAD information on the transparent fuel tank is inputted to the light molding device. Finally, by turning a switch of the light molding device, liquid-state UV-cured resin filled in a container of the light molding device in advance is gradually cured into the shape of the transparent fuel tank 61 by a UV layer, whereby the transparent fuel tank 61 is completed.

It is also possible to employ blow molding which is molded from the real fuel tank instead of light molding.

It is possible to arrange a rib as needed. For example, the plate thickness is set to 3 mm.

The transparent fuel tank 61 is divided into two members of the bottom plate 62 and the body portion 63.

The structure includes the bottom plate 62 and the body portion 63 combined by the first and second flanges 68, 71.

Subsequently, referring now to Fig. 1 to Fig. 4, how to use the transparent fuel tank 61 will be described.

The transparent fuel tank 61 is mounted in substantially the same manner as the fuel tank 21 as shown in Fig. 1, and the actual state of the wiring and piping disposed under the transparent fuel tank 61 is inspected visually. The actual movement of the wiring and piping is also inspected visually while rotating the transparent fuel tank 61 between the normal position (see Fig. 1) and the inspection and maintenance position 35 (see Fig. 2) as indicated by an arrow a1.

More specifically, the transparent fuel tank 61 is completed by mating the band-shaped first flange 68 of the transparent bottom plate 62 and the second flange 71 of the transparent body portion 63. Subsequently, the fuel hose 51, the electric cable 52, the vent hose 53, the overflow hose 54 are connected to the transparent fuel tank 61 from the state shown in Fig. 4 as shown in Fig. 3. Subsequently, the transparent hinge portions 67, 67 are mounted to the link hinge member 33 of the vehicle body frame 12 via bolts 72, 72, so that the transparent fuel tank 61 is placed at the normal position (see Fig. 1). The upper cowl 32 (see Fig. 1) is not mounted as a matter of course. Subsequently, the bending extents of the fuel hose 51, the electric cable 52, the vent hose 53, and the overflow hose 54 disposed under the transparent fuel tank 61 are inspected through the transparent fuel tank 61.

It is possible to connect all the members conventionally connected to the fuel tank 21, such as hoses other than the fuel hose 51, or electric cables which should be inspected, to the transparent fuel tank 61.

In this manner, since the transparent fuel tank 61 of the motorcycle 11 is formed of transparent resin so that the piping under the fuel tank 21 can be visually seen, the bending extent or the behavior of the fuel hose 51, the electric cable 52, the vent hose 53, the overflow hose 54 which are the same state as under the fuel tank 21 can be reproduced for inspection through the transparent fuel tank 61.

Since the transparent fuel tank 61 of the motorcycle 11 has the same shape as the normal fuel tank 21, and has the structure including the bottom plate 62 and the body portion 63 combined together, the weight of the transparent fuel tank 61 can be reduced by controlling the plate thickness of the structure, and hence the light weighted transparent fuel tank 61 is achieved. Therefore, it is convenient when mounting and dismounting, or moving the transparent fuel tank 61.

Since the transparent fuel tank 61 is provided with the fuel piping, the actual movements of the fuel hose 51, the electric cable 52, the vent hose 53, and the overflow hose 54 can be visually inspected while rotating the transparent fuel tank 61 between the normal position (see Fig. 1) and the inspection and maintenance position 35 (see Fig. 2) as indicated by the arrow al.

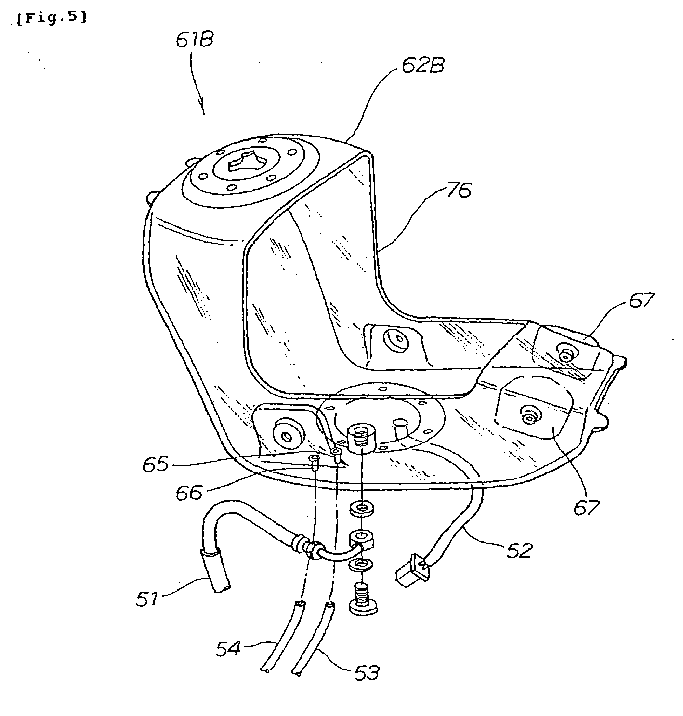

Subsequently, an example will be shown below. Fig. 5 is a perspective view of an example of a transparent fuel tank 61B which is not covered by the present invention. The same structures as in the embodiment shown in Fig. 1 to Fig. 4 are represented by the same reference numerals and description is omitted.

The transparent fuel tank 61B corresponds to a transparent bottom plate 62B which has the same shape as the bottom plate 74 (see Fig. 3) of the normal fuel tank 21. Reference numeral 76 designates an opening.

The transparent fuel tank 61B (which is the transparent bottom plate 62B) according to the above-described another embodiment has the same effect as the transparent fuel tank 61 (see Fig. 4).

Since the transparent fuel tank 61B corresponds to the transparent bottom plate 62B having the same shape as the bottom plate 74 of the normal fuel tank 21, the fuel hose 51, the electric cable 52, the vent hose 53, and the overflow hose 54 are seen only through the transparent bottom plate 62B, and hence in comparison with a case in which these members are seen through the bottom plate 62 and the body portion 63, the fuel hose 51, the electric cable 52, the bent hose 53, and the overflow hose 54 seen therethrough can be viewed with less distortion, and hence distortion can be reduced.

Referring now to Fig. 4 and Fig. 5, still another embodiment of the transparent fuel tank will be described.
The transparent fuel tank according to the above-described still another embodiment includes an opening, which is like the opening 76 shown in Fig. 5 but reduced in size, formed on a part of the body portion 63, so that the fuel hose 51, the electric cable 52, the bent hose 53, and the overflow hose 54 under the bottom plate 62 can be inspected from the inside of the tank.

The transparent fuel tank according to the above-described still another embodiment has the same effect as the transparent fuel tank 61 (see Fig. 4).

According to the above-described transparent fuel tank B, since the fuel hose 51, the electric cable 52, the bent hose 53, and the overflow hose 54 can be seen only through the transparent bottom plate 62 from the opening. (see the opening 76 in Fig. 5), and hence the fuel hose 51, the electric cable 52, the vent hose 53, and the overflow hose 54 can be seen therethrough are viewed with less distortion than the case of being viewed through the bottom plate 62 and the body portion 63, and hence distortion can be reduced.

### [Description of Reference Numerals and signs]

- 11:: motorcycle
- 21:: fuel tank
- 51:: fuel piping(fuel hose)
- 52:: electric hose
- 53:: vent hose
- 54:: discharge hose
- 61:: transparent fuel tank
- 62:: bottom plate of transparent fuel tank
- 63:: body portion of transparent fuel tank
- 74:: bottom plate of transparent fuel tank

## Claims

1. A transparent fuel tank (61) for a motorcycle (11) being formed of transparent resin so that piping under the fuel tank (21) can be viewed, **characterized in that** the transparent fuel tank (61) for a motorcycle (11) is divided into two members of a bottom plate (62) and a body portion (63) combined together;
the bottom plate (62) including a bottom portion, a part of a side portion, and a part of a top portion, said bottom plate (62) also including a first band-shaped flange (68); and the body portion (63) including the remaining portion of the side portion and the remaining portion of the top portion, said body portion (63) also including a second band-shaped flange (71) mating with said first band-shaped flange (68) of said bottom plate (62).

2. The transparent fuel tank (61) for a motorcycle (11) according to claim 1,
**characterized in that** the transparent fuel tank (61) is adapted to be connected to a fuel hose (51).

3. The transparent fuel tank (61) for a motorcycle (11) according to any of the preceding claims, **characterized in that** the transparent fuel tank (61) is utilized as a jig for confirming wiring and the piping under the fuel tank (21).

4. The transparent fuel tank (61) for a motorcycle (11) according to any of the preceding claims, **characterized in that** the body portion (63) of the transparent fuel tank (61) comprises an opening so that the wiring and the piping under the bottom plate (74) can be inspected from an inside of the tank.

## Patentansprüche

1. Transparenter Kraftstofftank (61) für ein Motorrad (11), welcher aus einem transparentem Harz gebildet ist, so dass Rohrleitungen unter dem Kraftstofftank (21) gesehen werden können, **dadurch gekennzeichnet, dass** der transparente Kraftstofftank (61) für ein Motorrad (11) in zwei Elemente aus einer Bodenplatte (62) und einem Karosserieabschnitt (63) unterteilt ist, welche miteinander kombiniert sind,
wobei die Bodenplatte (62) einen Bodenabschnitt, einen Teil eines Seitenabschnitts und einen Teil eines oberen Abschnitts enthält, wobei die Bodenplatte (62) auch einen ersten bandförmigen Flansch (68) enthält; und wobei der Karosserieabschnitt (63) den verbleibenden Abschnitt des Seitenabschnitts und den verbleibenden Abschnitt des oberen Abschnitts enthält, wobei der Karosserieabschnitt (63) auch einen zweiten bandförmigen Flansch (71) enthält, welcher mit dem ersten bandförmigen Flansch (68) der Bodenplatte (62) zusammenpasst.

2. Transparenter Kraftstofftank (61) für ein Motorrad (11) gemäß Anspruch 1, **dadurch gekennzeichnet, dass** der transparente Kraftstofftank (61) angepasst ist, um mit einem Kraftstoffschlauch (51) verbunden zu werden.

3. Transparenter Kraftstofftank (61) für ein Motorrad (11) gemäß irgendeinem der vorherigen Ansprüche, **dadurch gekennzeichnet, dass** der transparente Kraftstofftank (61) als eine Spannvorrichtung zum Befestigen der Kabel und der Rohrleitungen unter dem Kraftstofftank (21) verwendet wird.

4. Transparenter Kraftstofftank (61) für ein Motorrad (11) gemäß irgendeinem der vorherigen Ansprüche, **dadurch gekennzeichnet, dass** der Karosserieabschnitt (63) des transparenten Kraftstofftanks (61) eine Öffnung umfasst, so dass die Kabel und Rohrleitungen unter der Bodenplatte (74) von einer Innenseite des Tanks überprüft werden können.

## Revendications

1. Réservoir de carburant transparent (61) pour une motocyclette (11) réalisé en une résine transparente de sorte qu'un tuyau sous le réservoir de carburant (21) puisse être vu, **caractérisé en ce que** le réservoir de carburant transparent (61) pour une motocyclette (11) est divisé en deux éléments consistant en une plaque inférieure (62) et une portion de corps (63) combinées l'une à l'autre ;
la plaque inférieure (62) comprenant une portion inférieure, une partie d'une portion latérale, et une partie d'une portion supérieure, ladite plaque inférieure (62) comprenant également un premier rebord en forme de bande (68) ; et la portion de corps (63) comprenant la portion restante de la portion latérale et la portion restante de la portion supérieure, ladite portion de corps (63) comprenant également un deuxième rebord en forme de bande (71) s'accouplant audit premier rebord en forme de bande (68) de ladite plaque inférieure (62).

2. Réservoir de carburant transparent (61) pour une motocyclette (11) selon la revendication 1,
**caractérisé en ce que** le réservoir de carburant transparent (61) est adapté pour être relié à un tuyau de carburant (51) .

3. Réservoir de carburant transparent (61) pour une motocyclette (11) selon l'une quelconque des revendications précédentes, **caractérisé en ce que** le réservoir de carburant transparent (61) est utilisé en tant que dispositif de montage pour confirmer le câblage et la tuyauterie sous le réservoir de carburant (21).

4. Réservoir de carburant transparent (61) pour une motocyclette (11) selon l'une quelconque des revendications précédentes, **caractérisé en ce que** la portion de corps (63) du réservoir de carburant transparent (61) comprend une ouverture de sorte que le câblage et la tuyauterie sous la plaque inférieure (74) puissent être inspectés à partir de l'intérieur du réservoir.
